# EUROPEAN PATENT APPLICATION

(11) **EP 2 667 336 A1**
(43) Date of publication of application: **27.11.2013**
(21) Application number: 12405048.5
(22) Date of filing: 21.05.2012
(51) Int. Cl.: G06Q 10/08

(54) **Distributed computer network in a system for international shipment of goods**

(71) Applicant: Die Schweizerische Post AG, 3030 Bern (CH)
(72) Inventor: Altorfer, Stefan, 2555 Brügg (CH)
(74) Representative: Rüfenacht, Philipp Michael

(57) **Abstract**

A distributed computer network in a system for international shipment of goods comprises a merchant product database (12) for storing item information relating to a plurality of items on sale from a merchant, the item information comprising a plain text description of the item, a classification database (22) for storing criteria and customs classifications, each of the customs classifications being assigned to at least one of the criteria, a classification service (21) receiving item information from the merchant product database (12) and having access to the classification database (22), for automatically assigning at least one of the customs classifications to the item information and a customs agent terminal (31) receiving the at least one customs classification assigned by the classification service (21). The customs agent being presented with the automatically assigned classification(s) facilitates the customs agent's job. Furthermore, the customs agent will be able to correct errors due to the automatic classification, thereby improving the correctness of the classification.

## Description

### Technical Field

The invention relates to a distributed computer network in a system for international shipment of goods. It further relates to a method for international shipment of an item.

### Background Art

Electronic commerce gets the more and more important. Inter alia, it is a great opportunity for providers of goods and services to expand their customer base. In this context, cross-border electronic commerce is of increasing importance. However, for the corresponding international commercial transactions usually customs duties have to be paid. Substantially every country has its own customs tariff for determining the duties based on a classification of the item to be imported.

On one hand, the classification of all the shipped items is time-consuming. On the other hand, usually, in the case of international business-to-consumer (B2C) transactions, it is the customer who bears the delivery costs as well as customs duties, taxes and further expenses in connection with the shipping. Whereas the delivery costs are usually credited by the merchant the further costs (in particular the customs duties and taxes to be paid in connection with the customs duties) are often directly charged to the customer. Accordingly, the customer is confronted with a plurality of invoices, and when deciding about the purchase the customer has no reliable information about the additional costs not included in the amount to be paid to the merchant.

Due to these shortcomings, systems have been developed which provide the customer with information on the customs duties, taxes and further costs in connection with the shipping.

As an example, WO 01/24096 A1 (H. R. Kamman) relates to systems and methods for facilitating international electronic commerce through a distributed computer network such as the Internet. The method includes the steps of obtaining purchase transaction details concerning one or more items that are to be purchased, processing at least a portion of the purchase transaction details to select a harmonized code for shipping the item to a prescribed destination at a minimum applicable tariff rate, determining the tariff due for shipping each such item to a particular destination by applying the selected harmonization code, and reporting the tariff due through the distributed computer network. Preferably, the selection of a harmonized code includes searching through a tariff schedule of the particular destination and identifying a harmonized code that best fits item descriptors included in the purchase transaction details. Results obtained in this automatic process, relating to a previously unknown item, are stored in the tariff server, together with detailed item information.

The disclosed systems and methods improve the customer experience and facilitate the determination of customs classifications. However, there is still room for improving the correctness of the classification and for making the importation of items more cost-efficient.

### Summary of the invention

It is the object of the invention to create a distributed computer network in a system for international shipment of goods as well as a method for international shipment of an item pertaining to the technical field initially mentioned, that improve the correctness of the classification and that ease the customs declaration process when importing the goods.

The solution of the invention is specified by the features of claim 1. According to the invention the computer network comprises the following:
a) a merchant product database for storing item information relating to a plurality of items on sale from a merchant, the item information comprising a plain text description of the item;
b) a classification database for storing criteria and customs classifications, each of the customs classifications being assigned to at least one of the criteria;
c) a classification service receiving item information from the merchant product database and having access to the classification database, for automatically assigning at least one of the customs classifications to the item information;
d) a customs agent terminal receiving the at least one customs classification assigned by the classification service.

Accordingly, a method for international shipment of an item comprises the steps of:
a) receiving a plain text description of the item from a merchant;
b) access a classification database for automatically assigning at least one of the customs classifications stored in the classification database to the item description, applying criteria being stored in the classification database to the plain text description;
c) sending the at least one assigned customs classification to a customs agent terminal;
d) the customs agent manually assigning a customs classification to the item based on the at least one automatically assigned customs classification.

Usually, merchant product databases are administered by the merchant or a service provider entrusted by the merchant, i. e. they are part of the merchant domain of the computer network. They comprise plain text descriptions of the items on sale for information purposes. The descriptions are displayed e. g. on the e-commerce web site of the merchant. Accordingly, the inventive computer network or method do not require feeding additional information into the merchant product database. The plain text descriptions may comprise e. g. key words, qualifying adjectives, parameter values and/or continuous text. The plain text description may be stored in the product database in any of the known formats such as according to the ASCII code or in coded and/or encrypted form. Furthermore, the plain text description relating to a given item may be contained in a single field of the database or in a plurality of fields. The information corresponding to the plain text information may be stored in such a way that plain text information is not itself stored in the database but automatically generated based on fields of the database related to an item. As an example, a "color" field of the database comprises elements such as "w", "Ig", "dg", "b", etc. and these entries are unambiguously converted to "white", "light gray", "dark gray", "black", etc. Furthermore, descriptions may contain plain text as well as coded fields.

In the following, the term "customs classification" relates to an identification (such as a code) that designates a certain class of goods, according to a standard, usually stipulated by the governments of states engaging in international commerce. Today, most of the national classification systems are based on the so-called Harmonized Commodity Description and Coding System (HS). However, it is to be noted that - firstly - the contracting parties of this system set their own rates of duty, and - secondly - that the parties are free to adopt additional subcategories and notes. In principle, the present invention may be used in connection with HS classification systems but also in connection with other systems.

In the classification database, the stored customs classifications mentioned above are each assigned to at least one of the criteria, i. e. if a certain criteria (or a certain combination of different criteria) is met, the respective customs classification will be elected. It is to be noted that the classification database may store further customs classifications that are not yet assigned to criteria. It will be described below that this does not compromise the operation of the system.

The classification service may be a computer program running on a server, in particular a web service. Usually, the server will be remote from the merchant database as well as from the customs agent terminal. In any case, the classification service will receive item information originating from the merchant product database, either by directly assessing this product database, by assessing another database where the needed information is stored ("pull") or by receiving a corresponding request, including the item information ("push"). Furthermore, the classification service has access to the classification database. Using both the item information and the criteria and customs classifications of the classification database the classification service automatically assigns at least one of the customs classifications to the item information. It is to be noted that the classification service may be operated in such a way that always only one of the classifications is assigned, alternatively any number of classifications is assigned, or a certain maximum number (such as three classifications) is stipulated.

The customs agent terminal is a terminal which allows for displaying information to the customs agent, i. e. to a person who is responsible for declaring imported products vis-a-vis the customs authorities. Usually, the customs agent works on behalf of a shipment service provider. He or she is responsible for preparing and presenting the declaration to customs as well as for paying all taxes due. The customs agent terminal is a part of the distributed computer network which is situated in a remote location with respect to the merchant product database, and usually also in a remote location with respect to the classification database and the classification service. In preferred embodiments, multiple customs agent terminals will be connected to the distributed network and exchange data with a centralized classification service.

The customs agent being presented with the automatically assigned classification(s) facilitates the customs agent's job, inter alia because the probable classifications can be provided to the customs agent quite some time before the actual declaration is required for importing the item. Furthermore, especially in difficult cases, the customs agent will be able to correct errors due to the automatic classification, thereby improving the correctness of the classification.

Preferably, the customs agent terminal comprises a user interface allowing for selection of one of a plurality of assigned customs classifications. In case of ambiguities when automatically assigning one of the customs classifications, this allows for assigning several classifications (up to 3, for example) and leaving the final decision to the customs agent. He or she can easily choose from the recommended customs classifications. It is to be noted that the selection of one of a plurality of classifications will not be required if the classification service assigns a single classification to the item information. Therefore, the user interface may be controlled in such a way that the selection dialog is only displayed if a selection is required. The dialog may be embodied in different ways, e. g. using checkboxes, a drop-down list, a menu etc. Advantageously, information relating to the displayed classifications are retrieved from a classification information database and displayed along the classifications to be selected.

Alternatively, the classification service will always assign a unique classification, thus making a selection unnecessary.

Advantageously, the customs agent terminal comprises a user interface allowing for entering a customs classification by the customs agent, the classification differing from the at least one assigned customs classification. Therefore, the customer agent is able to enter a manually assigned customs classification. In this context "entering" includes typing in the classification, choosing or confirming a classification from a list or table or other ways of entering data.

Preferably, the network comprises an updating service receiving information from the customs agent terminal about a customs classification chosen by the customs agent, and accessing the classification database for complementing the criteria stored in the classification database based on the information received from the customs agent. As mentioned before, there are different ways for the customs agent to choose the classification, such as selection of one of a plurality of customs classifications assigned by the classification service and/or entering a manually assigned customs classification. The updating service allows for automatically updating the classification database if the automatically assigned customs classification and the manually assigned customs classification do not match. Therefore, exploiting the customs agent's know-how the information content of the classification database is improved.

The comparison between the automatically assigned classification and the classification entered or selected by the customs agent may take place at the customs agent terminal, which means that updating information needs only to be sent to the updating service if there is a mismatch or a choice from more than one offered classifications. Alternatively, the information is always sent to the updating service and the comparison between the automatically assigned classification and the classification chosen by the customs agent is effected by the updating service.

The information sent to the updating service will not only include the selected classification but also further information which allows for identifying the associated item, such as the item description, a product ID, a ticket number of the classification service, or similar. In addition to the classification, further information determined by the customs agent may be fed back to the updating service, such as the actual duties and/or taxes.

Thanks to the updating service the classification service in the distributed network is a self learning system. The results of a given transaction are used for improving the results of future transactions. In principle, besides his or her usual task the customs agent is part of the inventive system as he or she performs human-based computation. Human-based computation is a computer science technique in which a computational process performs its function by outsourcing certain steps to humans. This approach uses differences in abilities and alternative costs between humans and computer agents to achieve symbiotic human-computer interaction.

In traditional computation, a human employs a computer to solve a problem; a human provides a formalized problem description to a computer, and receives a solution to interpret. Human-based computation reverses the roles; the computer asks a person or a large group of people to solve a problem, then collects, interprets, and integrates their solutions.

In the case of the invention, the customs agent performs the checks and, if necessary, the recalculation of the classification (and possibly further information) to correct what the classification service has automatically calculated. The classification service from this process improves its results for future transactions.

It is to be noted, that updating a classification database based on the information obtained from the customs agent's classification is advantageous also in cases where the automatically assigned classification is not delivered to the customs agent or delivered together with the goods to be classified. If the system is able to associate specific items with the finally determined classification, updating and thereby improving the classification database will be possible nevertheless. A corresponding distributed computer network will include a customs agent terminal or other instance for feeding back the final classification, but it will not require that the automatically determined classification is sent to the customs agent terminal.

In a preferred embodiment of the invention, a confidence level is allocated to each of the at least one assigned customs classifications. Depending from how the classification has been assigned to a product based on the product description, the classification may be more or less reliable. When determining the confidence level of a classification relating to a certain product, in particular one or several of the following criteria may be applied:
1. whether the classification has been assigned / confirmed by a customs agent;
2. whether the classification has been assigned / confirmed by another person (having know-how relating to customs classification, but not as experienced as a customs agent);
3. the number of times the classification has been confirmed (or dismissed, respectively);
4. data from the automatic classification process (e. g. suitable data generated from using statistical methods for classification).

Accordingly, the confidence level will be very high for a classification that has been assigned by a customs agent and confirmed by customs agents several times. In contrast, the confidence level will be low if the classification has been assigned the first time, in the context of the automatic classification process.

Based on the confidence levels stored in the classification database and/or obtained from the automatic classification process, it will be often possible to narrow down the number of assigned classifications to a single one. For example, a single classification may be assigned if the confidence level of this classification reaches a certain threshold (such as "80 out of 100" or similar) and if there are no further classifications reaching that threshold. Similarly, a classification may be singled out if a difference between its confidence level and the confidence level of the next best classification is above a certain value (e. g. 40 if the range of possible confidence levels is between 0 and 100). Further criteria are possible.

Preferably, the confidence level is displayed to the customs agent, in the context of the respective user interface. This will further assist the customs agent in the classification process.

Preferentially, the criteria of the classification database comprise tuning data and classification rules, whereas in a first step the plain text description of the item information is filtered using the tuning data in order to extract relevant attributes (tokenizing the text), and whereas in a second step customs classifications are determined from these attributes (or tokens) using the classification rules.

The tuning data is used for filtering the plain text description of the item information, thereby extracting relevant attributes (e. g. for textiles: gender, size, color, material, etc.). These attributes are then used in the second step by a classifier that is trained with the classification rules for the required destination country or the required destination countries, respectively. The tuning data therefore includes keywords that are to be searched within the plain text description, rules for recognizing relevant data (e. g. a list of possible indications for gender, size, color, material, etc.), a thesaurus for finding synonyms, etc. The classification rules process the attributes, in particular by performing logical tests and operations, in order to find the correct classification or a small selection of possible classifications.

Preferably, a plurality of sets of criteria are stored in the classification database, whereas the sets correspond to different languages of the item description.

This allows for a widespread geographical use of the classification service, including merchants offering their goods in different languages. Most preferably, when determining the classification of an item by the classification service the descriptions in multiple languages will be taken into account, if present. This allows for improving the result of the determination. As an example, the classification may be determined based on the item descriptions in two, three or more languages. The resulting classifications based on the different languages may constitute a set of classifications for the customs agent to choose from or the results may be combined using statistical methods, determining a most probable choice of classification.

Alternatively, all criteria of the classification database relate to the same language, correspondingly, the item descriptions will be provided in that given language. If required, a machine translation step may be effected prior to the classification step.

Advantageously, the inventive method comprises the further step of using the at least one automatically assigned customs classification for the calculation of expected customs duties.

This allows for using the inventive method and the distributed network for the calculation of the total landed cost (TLC) of a product purchased from the merchant. The TLC includes the costs for shipping the product into the destination country, including duties & taxes for the respective destination country. The TLC would be displayed in the context of an online shopping dialog with the purchaser, therefore providing the purchaser with the full information required for coming to a decision about initiating the purchase or not. Using the inventive method and computer network, the customs duties (or even the total landed cost) may be calculated in real time, based on updated information.

Furthermore, in an advantageous embodiment, the TLC is calculated using the inventive method and system already prior to checkout, in particular when a customer of the online shopping service browsing the catalog chooses a detailed view of a product. In that case, the inventive service will be asked to provide (on-the-fly) the TLC for shipment of that particular product (assuming that it is the only product to be shipped to the customer). Accordingly, the service calculates the TLC under the assumption that the shopping cart exclusively comprises the product shown in detailed view. During checkout, the service will be called a further time, which will allow for calculating the TLC for the complete shipment including all articles of the shopping cart.

In an alternative embodiment, in the browsing phase the TLC of the product shown in detailed view will be calculated under the assumption that it will be added to the articles that are currently in the shopping cart. Accordingly, the service will provide the difference between the TLC of the current shopping cart complemented with the further item and the TLC of the current shopping cart. This will usually lead to a lower TLC for a product to be added to a shopping cart already comprising articles. Furthermore, it provides the customer with a more accurate estimate of the additional costs to be expected when purchasing the further article.

In yet another alternative embodiment, the TLC of the current shopping cart along with the expected TLC of the current shopping cart complemented with the further article are displayed.

Advantageously, a highest customs duty is selected if more than one customs classification has been automatically assigned. Therefore, the system uses the highest tax and tariff rates in case of ambiguities. In doing so, customs will always receive at least the amount due, since in the worst case they will get the higher duties paid.

After installation of the inventive distributed computer network, the classification database will only contain incomplete and preliminary information (criteria). Therefore, at the beginning the service will calculate duties and taxes that exceed the "true" duties or taxes, therefore the attractiveness to buy the goods may be slightly lower. However, if the system is self learning as described above, the estimated TLC will become more accurate over time thus eliminating this disadvantage. At the same time, the full taxes and duties will always be covered by the TLC paid by the purchaser, and the customs will always receive at least the amount due. Furthermore, the classification database may be set up with reasonable effort.

In the context of the selection of the customs duty, the confidence levels may be taken into account. If the assigned classifications have not been reduced to a single one in the context of the classification process, the confidence levels may be employed for selecting the customs duty, i. e. the duty is chosen that relates to the classification having the highest confidence level.

In a preferred embodiment, the merchant product database receives and stores the at least one assigned customs classification from the classification service. This allows for easily and quickly calculating the respective costs to be displayed to the customer, even for different destination countries. If at the same time the shipment costs are available to the merchant its system may as well display the total landed cost to the customer.

In addition or instead of the classification the merchant product database may store the duties and taxes associated with the customs classification, in particular a set of such duties and taxes for a number of possible destination countries.

In a further preferred embodiment, the network comprises a merchant-independent association database whereas the association database receives and stores the at least one assigned customs classification from the classification service. Therefore, instead of having the classification submitted to the merchant, the data (including information indicating the respective product) is stored in the association database, and the merchants using the inventive network access this database when they need classification information. Preferably, the information is stored along data identifying the merchant having provided the product description. In cases where a whole set (batch) of the classification information is provided to the merchants, e. g. for inclusion in an electronic product catalog, the provider of the merchant-independent association database may check whether classifications of certain products of a merchant (or associated information such as duties or taxes, if present) have changed and inform the merchant accordingly.

Again, the association database may store duties and taxes instead of or in addition to the classification information.

Preferably, the network comprises a shipment database assigning a unique shipment identification to every shipment being processed by a shipping service provider, the shipment database comprising item information, whereas the shipment database is accessed by at least the classification service and the updating service.

A central shipment database allows for a number of value-added functions such as tracking of a shipment. At the same time, the operation of the system may be simplified, because specific items or shipments may be referred to by only the unique identification. If further information, such as the product description, the weight of the shipment, the destination, etc., are needed, the respective server may access the shipment database for obtaining the required data.

In alternative systems, where the automatically determined classifications are not submitted to the customs agent terminal, the unique shipment identification and the shipment database may be employed for finding out the final classification of an item shipped by a merchant.

Other advantageous embodiments and combinations of features come out from the detailed description below and the totality of the claims.

### Brief description of the drawings

The drawings used to explain the embodiments show:
- Fig. 1: a schematic representation of the distributed computer network according to an embodiment of the invention;
- Fig. 2: the user interface of a customs agent terminal according to the embodiment;
- Fig. 3: a block diagram of the classification and updating process; and
- Fig. 4: a schematic representation of a second embodiment of the invention, which allows for calculating the total landed cost of a product.

In the figures, the same components are given the same reference symbols.

### Preferred embodiments

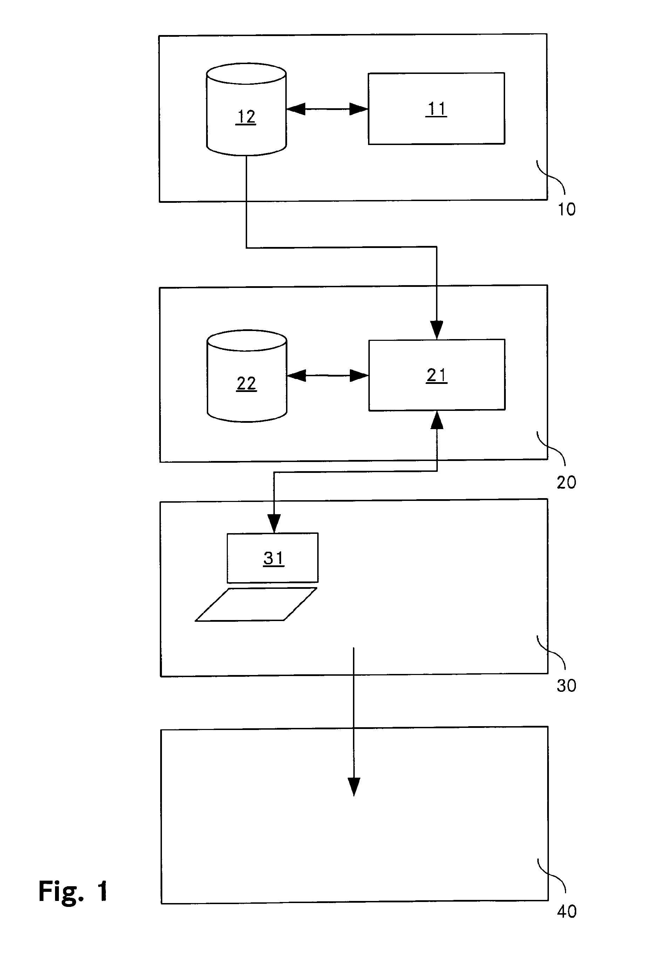

Figure 1 is a schematic representation of the distributed computer network according to an embodiment of the invention. The network is structured in four domains, namely the merchant domain 10, the classification service domain 20, the customs agent domain 30 and the customs domain 40. It is to be noted that inclusion of the customs domain is optional, as explained further below. The domains include further components which are not shown in Figure 1, only those components are displayed that have a specific task in the context of the inventive system. The servers, databases, terminals etc. of the different domains are connected by a suitable network, such as LAN, WAN or internet TCP/IP.

The merchant domain 10 includes an ecommerce server 11 which accesses inter alia a product database 12. The latter includes information about the products such as product descriptions, dimensions, weight, images, availability, pricing, accessories, etc.

Data stored in the product database 12, in particular the product descriptions, is submitted to a classification service 21 in the classification service domain 20. The classification service 21 accesses a classification database 22 storing criteria and customs classifications, as explained further below. The classification service 21 processes the data received from the product database 12 in order to assign country specific customs tariff codes (CTC) to the received product descriptions and/or to supplement the data stored in the classification database 22. Each assigned CTC will be furnished with a confidence level.

Assignments of CTCs from the classification service 21 together with their confidence levels are submitted to a customs agent terminal 31 in the customs agent domain 30. The corresponding information is displayed to the customs agent, who has the task of confirming or amending the assigned CTCs and forwarding the final CTC classification to the customs authorities (customs domain 40). Forwarding may be effected on the inventive distributed computer network or via other channels (other computer networks or other means of communication).

Furthermore, the customs agent may feed back information to the classification service 21, in particular data relating to the confirmation or amendment of CTCs.

The software components of the distributed computer network may e. g. be realized by a number of interacting web services implemented using known application frameworks such as Ruby on Rails, Grails, Django, etc. The classification service may access external web services via JSON/XML, preferably over secure (https) connections, and expose its own web services and/or JSON/HTML interfaces to users such as the merchant, the customs agent, etc. The databases may as well be realized based on broadly available solutions such as MySQL.

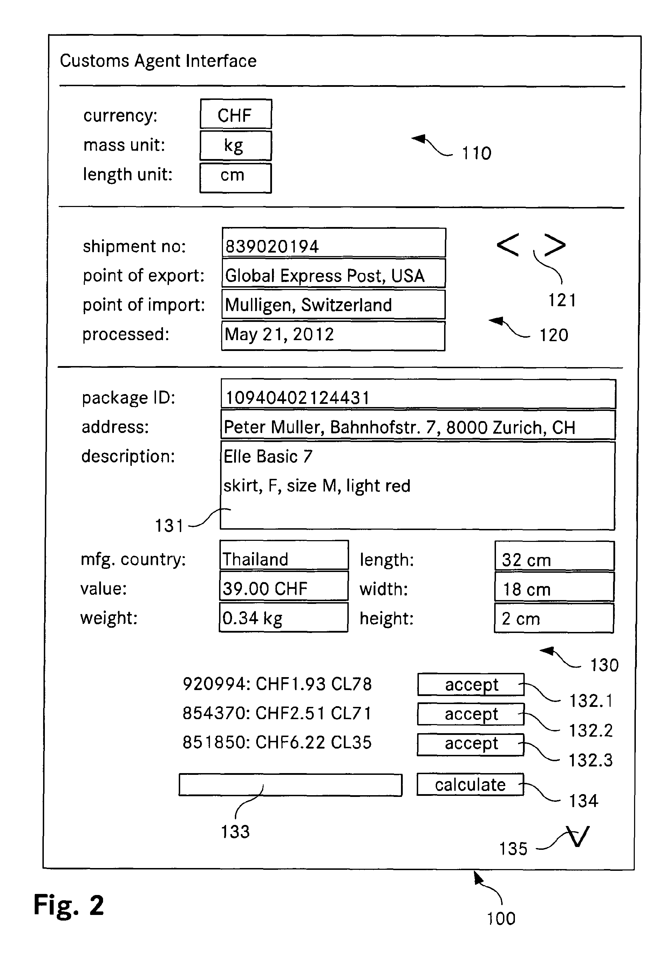

Figure 2 shows the user interface 100 of a customs agent terminal 31 according to the embodiment. The interface has a three-part structure displaying general configuration information 110, shipment-related information 120 and package-related information 130.

The general configuration information 110 includes information regarding the preset currency, the preferred mass unit and length unit. In the shown example, the preset currency is Swiss Francs (CHF), the mass and length units are kg and cm, respectively.

These preferences may be changed in a manner known as such by means of a respective user menu (not displayed).

The shipment-related information 120 includes information relating to a given shipment to be declared by the customs agent, namely the shipment number uniquely identifying the shipment, the point of export (exporting service provider), the point of import (location of customs clearance) and the process date. Two arrow buttons 121 allow for changing to the previous or next shipment. A specific shipment may also be chosen by entering the shipment number into the corresponding field of the user interface.

The package-related information 130 includes information relating to a specific package contained in the shipment identified in the shipment-related information 120. More specifically, the package-related information 130 includes a unique identification of the package, information on the size and weight as well as on the content of the package, including a plain text description 131 of the items as well as information relating to the manufacturing country and the value of the content. Furthermore, the package-related information 130 includes information on the customs classification of the packaged items according to the classification of the destination country. In the shown example, the user interface shows three possible classifications determined by the classification service 21, including the associated duties and confidence levels. Next to each of the suggested classifications an "accept" button 132.1, 132.2, 132.3 is located.

Furthermore, the section displaying the package-related information 130 includes a field 133 accepting further customs classifications, the field 133 being accompanied by a "calculate" button 134. Finally, an arrow button 135 allows for changing to the next package contained in the shipment. There is only one arrow button 135 because the displayed package is the first one of a plurality of packages.

The customs agent decides about whether one of the suggested classifications is the correct one for the product described by the package-related information. If this is the case, the customs agent will select the corresponding classification by activating the associated "accept" button 132.1...132.3. If none of these classifications apply, the customs agent will enter another classification into the field 133 and confirm by activating the "calculate" button 134. After doing that, a further line similar to the one showing the suggestions will appear, listing the classification along with the associated duties and including another "accept" button.

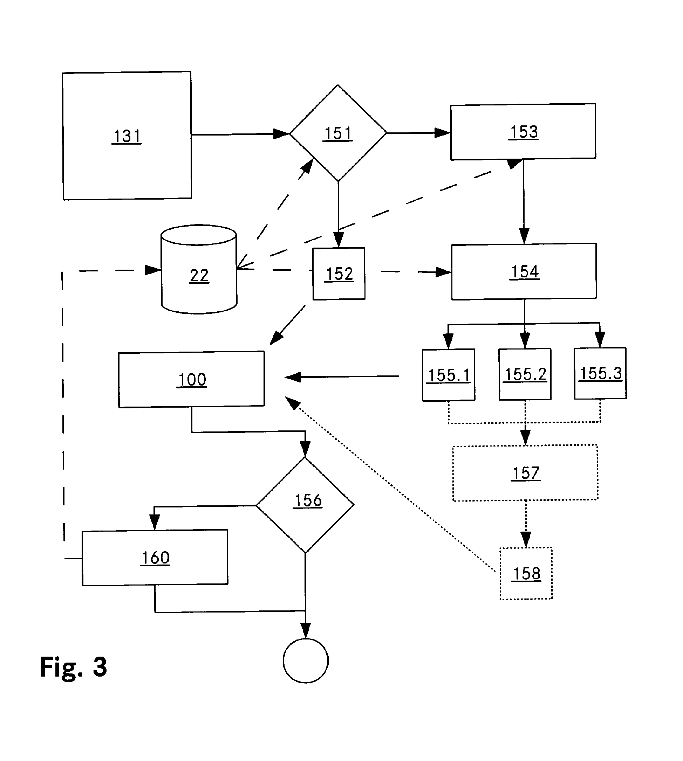

Figure 3 is a block diagram of the classification and updating process. The plain text description 131 of a product to be classified is compared with information in the classification database 22. If there is an exact match with previously stored information (e. g. because the plain text description 131 is identical to one stored in the database or if a unique product ID matches with one in the database) the corresponding classification 152 and the respective confidence level are assigned to the product to be classified (decision 151). If there is no exact match the plain text description 131 is parsed as explained in more detail below, using tuning data stored in the classification database 22 (parsing step 153). In a second step, classification rules stored as well in the database 22 are applied to the attributes obtained from parsing the description 131 (classifying step 154). This will result in one or several proposed classifications 155.1...155.3 together with respective confidence levels.

A further, optional step 157 may be applied if more than one classification 155.1...155.3 has been determined. Based on the confidence levels it is decided whether at least one of the multiple classifications 155.1...155.3 may be discarded or whether a single classification 158 may be singled out. As an example, step 157 yields all classifications 158 having a confidence level of at least 80 out of 100. If none of the classifications fulfills this requirement, all classifications 158 are kept.

In any case, the assigned classification(s) 152, 155.1...155.3, 158 will be submitted to the customs agent terminal 31 and displayed together with the respective confidence levels in the context of the user interface 100 described in connection with Figure 2 above. It is now up to the customs agent to decide whether one of the suggested classifications is correct or whether another classification should be chosen. Correspondingly, the customs agent will accept the classification deemed correct for the product at issue. Next, it will be decided whether this classification corresponds to a unique classification 152 provided due to a perfect match or whether it is one of the classifications 155.1...155.3 obtained from the automatic classification process, or another classification determined by the customs agent, respectively (decision 156). In the first case, the classification of the product is completed. In the second case, the product data (product ID and/or product description and further data) along with the final classification are submitted to an updating service 160 supplementing the classification database 22 with the corresponding information. At the same time, the confidence levels relating to the product/classification will be updated in the classification database 22. The updated confidence level will be based on the previously stored confidence level (if applicable) and data from the classification process as described above.

As soon as all packages of a given shipment have been processed, the classifications (i. e. the CTCs) of a given shipment (the "Grouped shipment clearance information") will be forwarded to the customs as mentioned above. It is to be noted that the submission of the classifications as well as the checks relating to the match with suggested classifications may be based on individual codes fed back from the customs agent terminal or on the totality of codes assigned during the bulk clearance process.

Processing of the plain text description 131 works essentially as follows: First of all, the language of the unstructured text string provided by the merchant, containing the product definition and particulars is determined. Depending from the language an appropriate set of tuning data is used in order to extract classification relevant attributes from the description (thereby tokenizing the text). As an example, if a first matching process yields the result that the item to be classified is a piece of clothing, the text is searched for information relating to whether it is women's, men's or children's clothing (such as keywords like "woman", "man", "girl", "boy", "kid" or respective abbreviations), furthermore the text is searched for information relating to the size of the piece of clothing, e. g. by comparing with usual size indications for the respective kind of clothing (like "L", "XL", "54" etc.).

Next, classifiers apply classification rules to the attributes. Based on the information extracted from the plain text description (men's shirt, cotton, white color, size 43, etc.) the CT code according to the destination country's classification is determined.

Initially, the classification service will undergo a training process. This may include splitting sample "truth" or "correctly classified text" data randomly into two sets. One is fed to a set of classifiers (using known machine learning algorithms such as Support Vector). The classification rules are also included as one of the "truth" data sets. The Classifiers "learn" and build their tables based on this training process. They are tested with the remainder of the "truth" set (Validation Text). Updating of the classification rules may be effected by subsequent training of the classifiers, feeding in further "truth" data sets based on the determinations of the customs agent. Apart from the automatic training process based on sample data and the classification of real shipments by the customs agents the quality of the classification rules may be improved by having sample data (virtual shipments) classified by customs agents or other personnel having a certain know-how on customs classifications. The product descriptions to be classified by the customs agents or other personnel may be selected based on the confidence levels of the assigned classifications. As an example, a new product description that has not been previously classified may be first submitted to the automatic classification service. If a classification results that has a confidence level that exceeds a certain threshold, a manual classification will not seem to be necessary. On the other hand, if the confidence level is not reached and if the description is not classified anyway, e. g. because the product is purchased and therefore becomes a subject of classification by a customs agent, the product description will be forwarded to responsible personnel for manual classification.

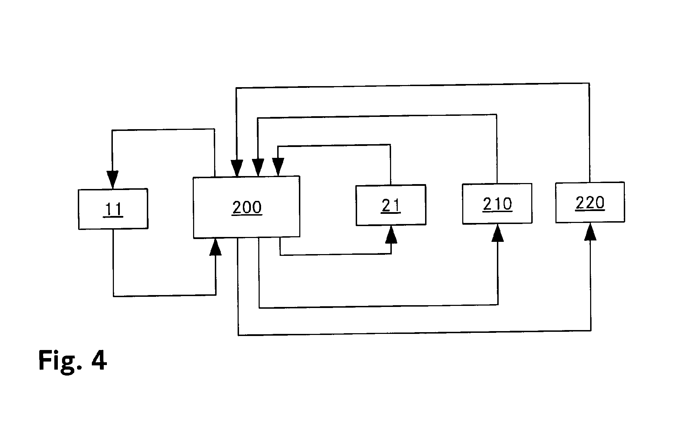

Figure 4 is a schematic representation of a second embodiment of the invention, which allows for calculating the total landed cost of a product. In the context of this embodiment, the classification service 20 is a component of a total landed cost (TLC) calculator 200. First of all, data stored in the product database of the merchant 11, in particular product descriptions, dimensions, weight and pricing, is submitted to the TLC calculator 200. This data is forwarded by the TLC calculator 200 to the classification service 21, together with a list of countries for which the total landed costs are to be determined. This list may have been provided by the merchant 11 (on a default basis or item specific) or it may be a list generated by the TLC calculator 200, e. g. a standard list including a selection of destination countries.

As described above, the classification service 20 determines the CT codes and feeds them back to the TLC calculator 200. Next, the TLC calculator 200 will provide a shipping price service 210 with the product information and the list of countries. Based on a respective database, the shipping price service 210 will determine the shipping charges for the given countries and feed them back to the TLC calculator. Calculation of the shipping charges is based on pricing information obtained from the providers of transport services involved. Depending on the implementation of the TLC calculator 200, the shipping price service 210 can be called with each shipment to get the rate, or by shipment-group, to get the price for the entire shipment-group.

Next, the TLC calculator 200 will provide a duties and taxes service 220 with the product information, the list of countries as well as the CT codes determined previously. The duties and taxes service 220 will then calculate the duties and taxes associated with the shipment and feed this information back to the TLC calculator 200. The TLC calculator 200 collects the received information and forwards it to the merchant 11. The calculation of the duties and taxes is based on the provided CTC(s), the country of import and the value of goods (including shipment cost). Furthermore, the duties and taxes service 220 may provide additional alerts, e. g. when the goods cannot be imported from a certain country of origin, etc.

If the CT code determined by the classification service 20 is not unique, it is checked whether there is a monetary difference between the alternative CT codes. If there is none, the TLC calculator 200 simply takes the first CT code provided and assigns it to the product item. If there is a monetary difference between the multiple CT codes returned, then the TLC calculator 200 selects the one with the highest duties and taxes.

Essentially, there are two main use cases for the TLC calculator 200. In a first scenario, the TLC calculator 200 is called during the checkout process of a merchant's customer and calculates the TLC "on the fly" using the respective information about the shopper's destination address and the products in the customer's shopping cart delivered using a suitable API. The TLC calculator 200 is called prior to the payment process (preferably also prior to the confirmation of the purchase) but after selection of the delivery address. It is possible to call the TLC calculator 200 only in certain instances, i. e. if the delivery goes to one of a given group of countries, if the delivery is accomplished by one of a given group of delivery services, etc. The TLC calculator 200 will deliver the total landed costs as described above. The TLC of the entire shopping cart may be provided to the merchant for display in the context of its ecommerce service. Alternatively, the TLC is displayed directly to the customer, e. g. by an applet included in the merchant's web site. The customer may decide about the purchase fully aware of the total costs. If the purchase is confirmed, the customer pays the full amount to the merchant (including shipping costs, taxes and duties).

Subsequently, delivery is effected using the usual services. However, the taxes and duties will not be charged to the customer (who has already paid for that) but to the delivery service. The delivery service invoices these costs from the merchant.

This first scenario, where the TLC are calculated in the context of the checkout process ("on-line") allows for a precise calculation of the TLC as they may take into account the most actual information relating to customs classification, shipment costs, taxes and duties as well as specifics of the actual shipment such as collecting a number of articles within a single package.

In a second scenario, the merchant provides the TLC calculator 200 essentially with its whole product catalog, e. g. by using an API of a specific web service or uploading a data file via a website. Each item of the catalog will be assigned a unique ID. The TLC for all products in the catalog (or a group of products designated by the merchant) is calculated and provided to the merchant for inclusion into the merchant's catalog, under the assumption that the given product is the only one to be shipped. This process may be fully automated and may be effected regularly such as once every day or every week in order to provide up-to-date results. There may also be a dynamic updating process initiated by the TLC calculator 200 (e. g. when there are database updates affecting any of the items in the catalog). For that purpose, the TLC calculator 200 may store the product IDs along with the determined CTC for each country of destination. The TLC calculator 200 will periodically (period to be configurable or be triggered manually) update the CTC in order to cover changes of the CTC classification. Furthermore, the TLC calculator 200 may cache the product IDs along with the determined shipping prices. Again, the TLC calculator 200 will periodically (period to be configurable or be triggered manually) rerun the shipping price query. If there is a change, updated information will be sent to the merchant. Similarly, the TLC calculator 200 will cache the duties and taxes for each product in the catalog. The TLC calculator 200 will periodically (period to be configurable or be triggered manually) redo the duties and taxes query and update the merchant when necessary.

Whereas specifics of a certain order cannot be taken into account in the context of this batch or "off-line" process, it is advantageous insofar as it works even if there is no steady communication link between the merchant and the TLC calculator 200. Furthermore, in the case of slow connections there is no slowing-down of the service. Furthermore, since the TLC calculator 200 is employed in a batch modus, the result of the classification can be manually reviewed and adapted in order to provide one single and correct CTC.

The invention is not restricted to the embodiments discussed above. In particular, the setup and communication architecture of the distributed network may be embodied differently. Furthermore, various options for implementing the classification process exist, including methods of artificial intelligence known as such.

In summary, it is to be noted that the invention creates a distributed computer network in a system for international shipment of goods as well as a method for international shipment of an item that improve the correctness of the classification and that ease the customs formalities when importing the goods.

## Claims

1. A distributed computer network in a system for international shipment of goods, comprising
a) a merchant product database for storing item information relating to a plurality of items on sale from a merchant, the item information comprising a plain text description of the item;
b) a classification database for storing criteria and customs classifications, each of the customs classifications being assigned to at least one of the criteria;
c) a classification service receiving item information from the merchant product database and having access to the classification database, for automatically assigning at least one of the customs classifications to the item information;
d) a customs agent terminal receiving the at least one customs classification assigned by the classification service.

2. The distributed computer network as claimed in claim 1, whereas the customs agent terminal comprises a user interface allowing for selection of one of a plurality of assigned customs classifications.

3. The distributed computer network as claimed in claim 1 or 2, whereas the customs agent terminal comprises a user interface allowing for entering a customs classification by the customs agent, the classification differing from the at least one assigned customs classification.

4. The distributed computer network as claimed in claim 2 or 3, further comprising an updating service receiving information from the customs agent terminal about a customs classification chosen by the customs agent, and accessing the classification
database for complementing the criteria stored in the classification database based on the information received from the customs agent.

5. The distributed computer network as claimed in one of claims 1 to 4, **characterized in that** the criteria of the classification database comprise tuning data and classification rules, whereas in a first step the plain text description of the item information is filtered using the tuning data in order to extract relevant attributes, and whereas in a second step customs classifications are determined from these attributes using the classification rules.

6. The distributed computer network as claimed in one of claims 1 to 5, **characterized in that** a plurality of sets of criteria are stored in the classification database, whereas the sets correspond to different languages of the item description.

7. The distributed computer network as claimed in one of claims 1 to 6, whereas the merchant product database receives and stores the at least one assigned customs classification from the classification service.

8. The distributed computer network as claimed in one of claims 1 to 7, further comprising a merchant-independent association database whereas the association database receives and stores the at least one assigned customs classification from the classification service.

9. The distributed computer network as claimed in one of claims 1 to 8, **characterized by** a shipment database assigning a unique shipment identification to every shipment being processed by a shipping service provider, the shipment database comprising item information, whereas the shipment database is accessed by at least the classification service and the updating service.

10. A method for international shipment of an item, comprising the steps of:
a) receiving a plain text description of the item from a merchant;
b) access a classification database for automatically assigning at least one of the customs classifications stored in the classification database to the item description, applying criteria being stored in the classification database to the plain text description;
c) sending the at least one assigned customs classification to a customs agent terminal;
d) the customs agent manually assigning a customs classification to the item based on the at least one automatically assigned customs classification.

11. The method as recited in claim 10, comprising the further step of the customer agent entering the manually assigned customs classification.

12. The method as claimed in claim 11, further comprising the step of automatically updating the classification database if the automatically assigned customs classification and the manually assigned customs classification do not match.

13. The method as claimed in one of claims 10 to 12, **characterized in that** a confidence level is allocated to each of the at least one assigned customs classifications.

14. The method as claimed in one of claims 10 to 13, **characterized in that** the step of automatically assigning at least one of the customs classifications comprises a first step of filtering the plain text description of the item information using tuning data and a second step of determining customs classifications from these attributes using classification rules, both the tuning data and the classification rules being stored in the classification database.

15. The method as claimed in one of claims 10 to 14, **characterized by** the further step of using the at least one automatically assigned customs classification for the calculation of expected customs duties.

16. The method as claimed in claim 15, **characterized in that** a highest customs duty is selected if more than one customs classification has been automatically assigned.
